# EUROPÄISCHE PATENTSCHRIFT

(11) **EP 3 194 144 B1**
(45) Veröffentlichungstag und Bekanntmachung des Hinweises auf die Patenterteilung: **25.11.2020**
(21) Anmeldenummer: 15757139.9
(22) Anmeldetag: 03.09.2015
(51) Int. Cl.: B29C 55/16

(54) **LINEARMOTORANGETRIEBENE SIMULTAN-RECKANLAGE**
LINEAR-MOTOR-DRIVEN SIMULTANEOUS STRETCHING INSTALLATION
INSTALLATION D'ÉTIRAGE SIMULTANÉ ENTRAÎNÉE PAR MOTEUR LINÉAIRE

(30) Priorität: 18.09.2014 DE 102014013901
(43) Veröffentlichungstag der Anmeldung: 26.07.2017
(73) Patentinhaber: Brückner Maschinenbau GmbH & Co. KG, 83313 Siegsdorf (DE)
(72) Erfinder: OEDL, Günter, A-5020 Salzburg (AT)
(74) Vertreter: Flach Bauer Stahl Patentanwälte Partnerschaft mbB
(86) Internationale Anmeldenummer: PCT/EP2015/001778
(87) Internationale Veröffentlichungsnummer: WO 2016/041620

(56) Entgegenhaltungen:
- WO-A1-01/45920
- WO-A1-80/01149
- WO-A1-89/12543

## Beschreibung

Die Erfindung betrifft ein Verfahren zum Betrieb einer linearmotor-angetriebenen Simultan-Reckanlage nach dem Oberbegriff des Anspruches 1 sowie eine zugehörige Simultan-Reckanlage nach dem Oberbegriff des Anspruches 8.

Reckanlagen finden insbesondere bei der Kunststofffolienherstellung Anwendung. Bekannt sind sogenannte Simultan-Reckanlagen, in welchen ein Kunststofffilm gleichzeitig in Quer- und Längsrichtung gereckt werden kann.

Die zu reckende Materialbahn, in der Regel also ein Kunststofffilm, wird mittels Kluppen erfasst, die auf beiden Seiten der zu reckenden Materialbahn auf umlaufenden Führungsbahnen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegenden Kluppen auf den Führungsschienenabschnitten mit einer Querkomponente divergierend zur Transportrichtung voneinander wegbewegt werden) zu einer Auslaufzone und dann auf einem Rückweg wieder zur Einlaufzone verfahren, wobei die Folie in der Auslaufzone beispielsweise einer gewissen Relaxation und/oder Wärmenachbehandlung unterzogen werden kann.

Die eingangs erwähnte simultane Reckanlage, insbesondere in Form einer simultanen Reckanlage für die Herstellung von Kunststofffolien umfasst üblicherweise zwei symmetrisch zu einer vertikalen Symmetrieebene angeordnete, umlaufende Führungsbahnen, wobei jede Führungsbahn eine teilweise oder ganz umlaufende Führungsschiene umfasst, längs derer Transportelemente auf der Führungsbahn verfahren bzw. bewegt werden. Diese Transporteinheiten umfassen üblicherweise die erwähnten Kluppen, also Kluppeneinheiten und Antriebseinheiten, die teilweise auch als Transportteile bezeichnet werden. Die Führung und Kraftaufnahme der Transportteile auf der Führungsschiene kann dabei über Gleitelemente, über Rollenelemente oder über eine Kombination aus Gleit- und Rollenelementen erfolgen. Grundsätzlich soll ein magnetisches Schwebesystem entlang einer Führungsstruktur nicht ausgeschlossen werden.

Bei Simultan-Reckanlagen erfolgt die Bewegung der Transporteinheiten auf Basis von Linearmotoren. Ein derartiges, linearmotorgetriebenes Transportsystem ist beispielsweise aus der WO 89/12543 A1, der WO 01/45920 A1 oder aus der DE 44 41 020 C1 als bekannt zu entnehmen.

Diese linearmotorgetriebenen Transportsysteme und insbesondere Reck- und Simultan-Reckanlagen sind in der Regel so aufgebaut, dass das Kluppenteil über eine Brücke mit der eigentlichen Antriebs- bzw. Transporteinheit verbunden ist. Die Einleitung der Antriebskräfte erfolgt beispielsweise über angeflanschte Sekundärteile, beispielsweise in Form sogenannter Permanentmagnete (unter Verwendung eines zugehörigen Magnetkäfigs), die an den sogenannten Antriebs- bzw. Transporteinheiten mit diesen mitverfahrbar angebracht sind. Dabei können zwischen den über einen Linearmotorantrieb angetriebenen Transporteinheiten auch leerlaufende Transporteinheiten vorgesehen sein, sogenannte "Idler", die mit keinem derartigen Sekundärteil unter Verwendung von Permanentmagneten ausgestattet sind. Ansonsten sind allerdings diese nicht angetriebenen Transporteinheiten konstruktiv entsprechend den angetriebenen Transporteinheiten ausgestaltet und werden ebenso über die zu reckende Materialbahn, in der Regel über den zu reckenden Kunststofffolienfilm eingeleiteten Filmkräfte mitbewegt, da die entsprechenden Kluppen den Filmrand während des Durchlaufs in Abzugsrichtung der Folienbahn erfassen. Die über den Linearmotor angetriebenen Transporteinheiten bewegen über die Kluppeneinheiten damit den zu reckenden Kunststofffilm durch die Folienanlage, wobei die dazwischen sitzenden, nicht angetriebenen Transporteinheiten dann über den die Anlage hindurch bewegten Kunststofffilm mitbewegt werden.

Der Vorschub mit Permanentmagneten, den sogenannten mit Sekundärteilen ausgestatteten Transporteinheiten, erfolgt über sogenannte Primärteile oder -einheiten, das heißt längs der Führungsbahn ortsfest vorgesehener Spulen und Wicklungen, über die entsprechende elektromagnetische Felder erzeugt werden können, mittels derer dann die mit den Permanentmagneten (Sekundärteilen) ausgestatteten Transporteinheiten längs der Führungsbahn fortbewegt werden.

### Stand der Technik

Verkettete Linearsynchronmotor-Systeme, wie sie z.B. aus der DE 196 34 449 bekannt sind, umfassen als sogenannte Primärteile eine Vielzahl hintereinander geschalteter Zonen mit Statorwicklungen, die in unterschiedlichen Phasenwinkeln mit vorwählbaren Stromamplituden ansteuerbar sind. Die Ansteuerung erfolgt dabei über Umrichter oder Frequenzumformer, die eine entsprechende Ausgangs-, Leistungs- oder Treiberstufe umfassen oder denen eine derartige Stufe nachgeschaltet ist.

Längs dieser Primärteile, d. h. längs der die Statorwicklungen umfassenden und in mehrere hintereinander geschaltete Zonen gegliederten Linearmotor-Strecke, sind dann die sogenannten Sekundärteile über das von den Primärteilen erzeugte Magnetfeld verfahrbar. Im Falle von Folienreckanlagen handelt es sich dabei um sogenannte Kluppen.

Am Ende einer jeden Schleife wird die Folienbahn, die sich nun mit einer höheren Geschwindigkeit als beim Einlauf fortbewegt, von den Wagen losgelassen, und die Wagen werden zum Beginn der Schleife zurückgeführt, wo die Folienbahn erneut ergriffen und durch die auseinander laufenden, sich beschleunigenden Wagen gestreckt wird.

Auf der Rückführseite einer jeden Schleife müssen die Kluppenwagen von der Folienbahn-Loslassgeschwindigkeit zur Folienbahn-Ergreifgeschwindigkeit abgebremst werden, wobei die Wagen bei dieser Geschwindigkeit aneinander aufgestaut werden.

Eine solche linearmotorgetriebene Folienbahn-Reckanlage mit der obigen Wagensteuerung ist aus der US 5 072 493 als bekannt zu entnehmen. Zusätzliche Einzelheiten und Verbesserungen an einem solchen System sind zudem aus der DE 44 36 676 A1 (bzgl. Kluppenwagen), der DE 195 13 301 A1 (bzgl. der Geschwindigkeitsanpassung von längs einer Schienenanordnung bewegbaren Wagen), der DE 195 17 339 A1 (bzgl. Schienenübergängen in einer Auslaufkurve) sowie der DE 699 15 267 T2 (bzgl. der Steuerung von Kluppenwagen in simultanen biaxialen Reckanlagen auf der Rückführseite) zu entnehmen. Es wird insoweit auf den Offenbarungshalt dieser Vorveröffentlichungen Bezug genommen.

Vor diesem Hintergrund ist es Aufgabe der vorliegenden Erfindung, ein verbessertes Simultan-Reckverfahren sowie eine zugehörige verbesserte Ansteuerungs-Vorrichtung zur Durchführung eines derartigen Reckverfahrens zu schaffen, welches insbesondere beim Anfahren eines Reckvorgangs einer Materialbahn Vorteile gegenüber herkömmlichen Lösungen aufweist.

Die Aufgabe wird bezüglich des Verfahrens entsprechend den im Anspruch 1 und bezüglich der Simultan-Reckanlage entsprechend den im Anspruch 8 angegebenen Merkmalen gelöst. Vorteilhafte Ausgestaltungen der Erfindung sind in den Unteransprüchen angegeben.

Die vorliegende Erfindung bezieht sich auf eine Steuerung von Kluppenwagen in simultanen biaxialen Reckanlagen zum Strecken von Materialbahnen und insbesondere Kunststofffolien-Bahnen, bei denen Kluppenwagen mit den erwähnten Kluppen und den zugehörigen Antriebseinheiten in zwei sich gegenüber liegenden Endlosschleifen unabhängig voneinander angetrieben werden.

Insbesondere bezieht sich die vorliegende Erfindung auf Reckanlagen, die Linearmotoren zum Vorschieben der Wagen durch die gesamten Endlosschleifen verwenden. Auf den nach innen gewandten Seiten der beiden Schleifen wird die Folienbahn durch Kluppen auf den Wagen am Einlauf einer jeden Schleife ergriffen und in Längsrichtung gestreckt, indem die einzelnen Wagen beschleunigt werden, wodurch der Abstand zwischen ihnen größer wird.

Gleichzeitig können die Wagen seitlich auseinander geführt werden, wodurch z.B. die Folienbahn seitlich gestreckt wird.

Im Rahmen der vorliegenden Erfindung können gegenüber herkömmlichen Lösungen deutliche Vorteile insbesondere in der Anfahrphase eines Reckprozesses erzielt werden.

Es hat sich nämlich gezeigt, dass beim Einsatz von herkömmlichen Simultan-Reckanlagen Probleme auftreten können.

Üblicherweise wird während des Simultan-Reckprozesses ein über einen Linearmotor angetriebenes und mit einer Kluppe versehenes Transportteil auf einer Sinuswelle entlang der Führungsschiene fortbewegt. Entsprechend der Auslegung des Linearmotors kann ein Film mit einer maximalen Anzugskraft (kurz auch "pull out force" genannt) vorwärtsbewegt bzw. gestreckt werden. Ist die durch den Film ausgeübte Kraft größer als die maximale Anzugskraft (also die "pull out"-Kraft), dann wird eine nachfolgende angetriebene Kluppe, d.h. ein nachfolgendes angetriebenes Transportteil aus der jeweiligen Sinuswelle gerissen und springt in die nächste Sinuswelle des Linearmotors. Die jeweils nachfolgende Kluppe, d.h. also die jeweils nachfolgende Transporteinheit verlässt also ihre eigentliche Position, was zur Folge hat, dass entweder die Materialbahn und insbesondere ein Kunststofffilm an einer undefinierbaren Position reißt oder aus der Kluppe an der entsprechenden Transporteinheit gezogen wird.

Ist die Kraft der Materialbahn und insbesondere eines Kunststofffolienfilms größer als die maximale Anzugskraft ("pull out"-Kraft), dann erfolgt die analoge Situation für alle folgenden Kluppen an den nachfolgenden Transporteinheiten. Ein Einzug der Materialbahnen und insbesondere einer Folie in die Reckzone ist dann nicht mehr möglich.

Vor diesem Hintergrund schafft die Erfindung ein verbessertes Verfahren und eine verbesserte Ansteuerungs-Einrichtung.

Die Erfindung basiert dabei auf dem Gedanken, beim Anfahren - oder bei einem insbesondere während des Anfahrens erfolgten Materialbahn-Riss - in Abweichung zum Normalbetrieb in der Reckzone nach einer ersten aktiv angetriebenen Transporteinheit mit zugehörigen Kluppen zumindest eine weitere nachfolgende aktiv angetriebene und mit einer weiteren Kluppe versehene Transporteinheit vorzugsweise gemeinsam in Materialbahn-Längsrichtung (also in Maschinen-Längsrichtung MD) zu beschleunigen.

Dies hat zur Folge, dass die zumindest beiden aktiv angetriebenen Kluppen ihren Relativabstand zueinander bevorzugt beibehalten und dadurch keine Reckung in Maschinenlängsrichtung MD (also Abzugsrichtung in der Materialbahn), sondern lediglich in Querrichtung dazu (TD-Richtung) in dem Bereich durchgeführt wird, in dem die erläuterten Kluppen an der Materialbahn angreifen, um sie zu recken.

Da in diesem Fall der Abstand zwischen den zumindest beiden Transporteinheiten und damit zwischen den zumindest beiden aufeinander folgenden Kluppen minimal ist, entfällt die dort normalerweise auftretende MD-Kraft und die in Querrichtung wirkende Kraft (TD-Kraft) der Materialbahn insbesondere des Films auf mehrere Einzelkluppen wird in einem betreffenden Bahnabschnitt verteilt. Dies führt dazu, dass die Kraft auf den führenden Teil der Materialbahn und insbesondere auf dem führenden Teil des Films merklich verringert werden kann. Dadurch wird die Gefahr eines möglichen Materialbahn- und insbesondere Filmrisses deutlich minimiert, so dass der Anfang einer Materialbahn problemlos durch die Reckzone gezogen werden kann.

Dabei können zwischen den zumindest beiden zu einer sog. Superkluppe (Gesamt-Zugeinrichtung) zusammengefassten Kluppen der zusammengefassten Transporteinheiten zudem zumindest eine weitere, beispielsweise zwei oder mehrere aktiv nicht angetriebene Transporteinheiten und Kluppen umfassen, die zwischen den zumindest beiden aktiv angetriebenen Kluppen auf jeder Seite der umlaufenden Bahn im Sinne einer zusammengefassten "Superkluppe" vorgesehen sind.

Das erfindungsgemäße Prinzip lässt sich aber in einer abgeschwächten Version auch dann noch realisieren, wenn zumindest eine erste aktiv angetriebene Kluppe auf jeder Führungsbahn und zumindest eine nachfolgende aktive Kluppe in der Simultanreckzone relativ zueinander "abgeschwächt" so beschleunigt werden, dass der Abstand der vorauseilenden Kluppe in der Beschleunigungsphase in der Simultanreckzone zu einer nachfolgenden nächsten aktiven Kluppe kleiner ist als im Normalbetrieb. Dadurch werden zwar auch Reckkräfte in Maschinenlängsrichtung auf die Materialbahn zwischen den beiden erfindungsgemäß relativ zueinander reduziert beschleunigten Kluppen eingeleitet, allerdings deutlich geringere Längsreckkräfte, verglichen mit jenen Längsreckkräften, wie sie im Normalbetrieb in der Reckzone auf eine Materialbahn einwirken.

Durch eine entsprechend aufgebaute und angepasste Ansteuerungs-Einheit kann diese Ansteuerung entsprechend umgesetzt werden.

Die Erfindung wird nachfolgend anhand von Zeichnungen näher erläutert. Dabei zeigen im Einzelnen:
- Figur 1a:: eine schematische Draufsicht auf eine Simultanreckanlage, bei der die Rücklaufseite gemeinsam mit der Vorlaufseite innerhalb eines Ofen verlaufend angeordnet ist;
- Figur 1b:: eine zu Figur 1a abgewandelte Ausführungsform, bei der die Rücklaufseite zur Prozessseite getrennt ist und außerhalb eines Ofens verläuft;
- Figur 2:: eine schematische Querschnittsdarstellung quer zur Längsrichtung einer Führungsschiene einer anhand von Figur 1a und 1b schematisch gezeigten Simultanreckanlage unter Verdeutlichung des Aufbaus einer Kluppentransporteinheit;
- Figur 3:: eine schematische auszugsweise vergrößerte Detailansicht der Ansicht gemäß Figur 1a zur Verdeutlichung eines Bewegungs- und Beschleunigungsprofils von aktiv angetriebenen Transportteilen mit zugehörigen Kluppen sowie nicht-angetriebene Transportteilen mit zugehörigen Kluppen (Idler) im Bereich der Einlaufzone, der Reckzone und der nachfolgenden Nachbehandlungszone im Normalbetrieb bei noch nicht erfasster Materialbahn;
- Figur 4:: eine zu Figur 3 ähnliche Darstellung zur Verdeutlichung der Verfahrensschritte, wenn ein vorlaufender Anfang einer Materialbahn im Übergangsbereich zur Reckzone im Normalbetrieb erfasst und in die Reckzone hineingezogen wird;
- Figur 5:: eine auf Figur 4 aufbauende vergleichbare Darstellung, zur Erläuterung des Auftretendes eines Materialbahn- oder Filmrisses;
- Figur 6:: eine zu den vorausgegangenen Figuren vergleichbare Darstellung hinsichtlich einer erfindungsgemäßen Lösung, bei welcher ein vorlaufender Materialbahn- oder Filmabschnitt erfasst und in die Reckzone hineingezogen wird;
- Figur 7:: eine entsprechende Darstellung zu Figur 6 zu einem späteren Zeitpunkt, bei der sich die im Rahmen der erfindungsgemäßen Lösung vorgesehene Gesamtzugeinrichtung mit mehreren Kluppen gemeinsam schon fast bis zum Ende der Reckzone fortbewegt hat;
- Figur 8:: eine entsprechende Darstellung zu Figur 7 zu einem nochmals späteren Zeitpunkt, bei der sich die im Rahmen der erfindungsgemäßen Lösung vorgesehene Gesamtzugeinrichtung die Reckzone bereits verlassen hat; und
- Figur 9:: eine zu den vorausgegangenen Figuren vergleichbare Darstellung hinsichtlich eines abgewandelten Ausführungsbeispiels.

Die nachfolgend erörterte linearmotorgetriebene Transport- und/oder Reckanlage ist anhand einer Simultan-Reckanlage erläutert.

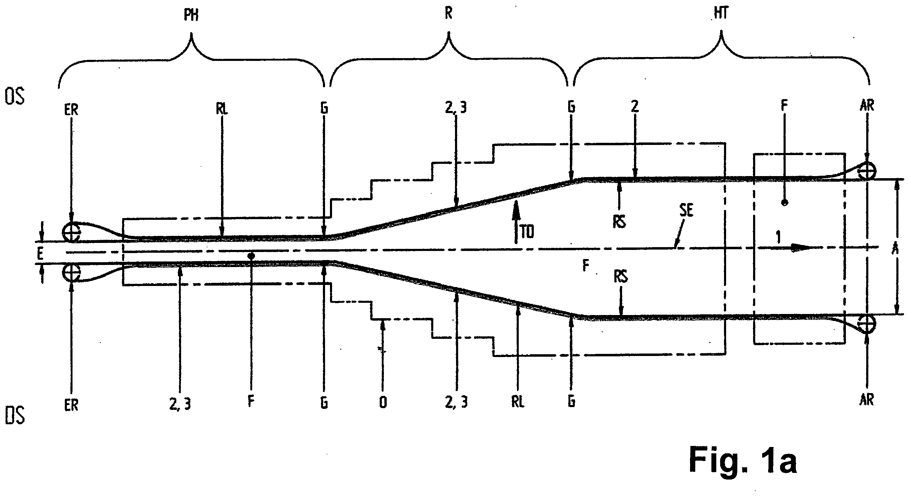

Eine derartige Reckanlage weist zwei symmetrisch ausgebildete Antriebssysteme auf, die symmetrisch zu einer mittleren, vertikal zur Zeichenebene verlaufenden Symmetrie-Ebene SE liegen. In Figur 1a sind die beiden symmetrisch zur Symmetrieebene SE in Abzugsrichtung 1 angeordneten Antriebssysteme eingezeichnet, wobei zwischen den beiden auf geschlossenen Bahnen 2 umlaufenden Antriebssystemen die zu behandelnde, d.h. zu reckende Materialbahn insbesondere in Form eines Kunststofffolienfilms F längs der Abzugsrichtung 1 hindurch bewegt wird.

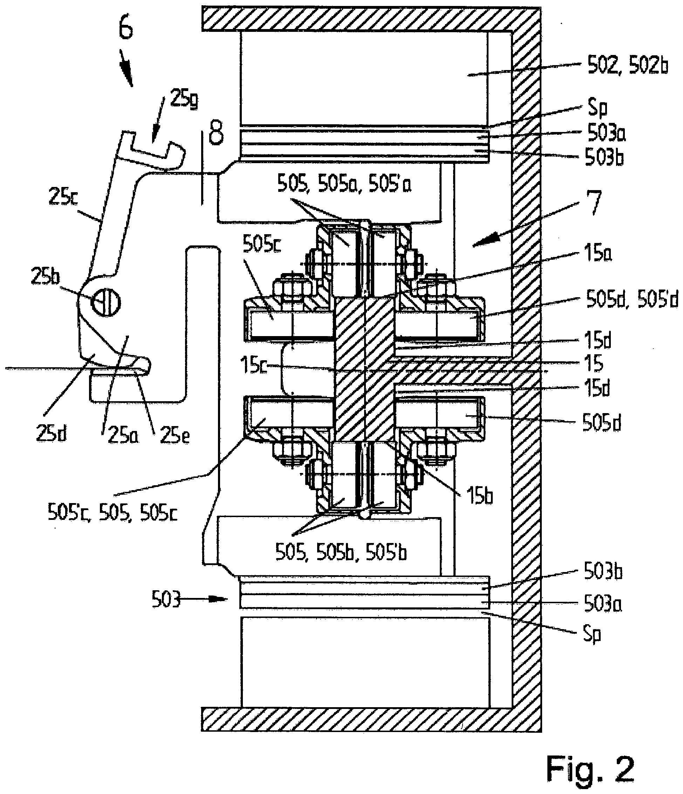

Eine unverstreckte Folie F (wobei im Folgenden von Folie gesprochen wird, obgleich mit einer derartigen Reckanlage allgemein eine Behandlungsbahn F entsprechend behandelt und simultan längs und quer gereckt werden kann, so dass die Erfindung insoweit nicht auf eine Kunststofffolienbahn beschränkt ist) läuft in einem Einlaufbereich ER in die Reckanlage ein und wird dort auf der Reck- oder Prozessseite RS von nachfolgend noch erörterten Kluppen, wie sie beispielsweise anhand von Figur 2 gezeigt sind, an beiden Rändern 8 ergriffen und eingeklemmt, und zwar auf der sogenannten Operator-Seite (OS operator side) sowie der antriebsseitigen Drive- Seite (DS drive side). Die Folie F wird dann in einer nachfolgenden Vorheizzone PH erwärmt und nachfolgend einer Reckzone R zugeführt, um hier simultan in Längs- und Querrichtung verstreckt zu werden. Anschließend durchläuft der verstreckte Film F verschiedene Wärmebehandlungszonen HT, bei denen auch eine Relaxation des Filmes erfolgen kann. Am Auslage AR der Reckanlage, d.h. am Ende der sogenannten Auslaufzone A, wird der Film durch geeignete Mittel ausgekluppt und verlässt dann die Simultan-Reckanlage.

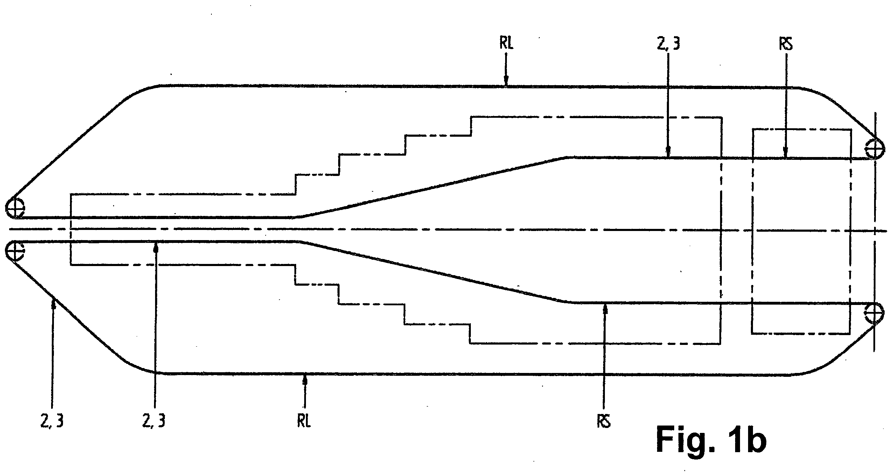

Ansonsten kann - wie auch anhand von Figur 1b gezeigt ist - die Führungsschiene im Vorlauf und damit im Reckbereich sowie im Rücklaufbereich abweichend verlaufen, nämlich derart, dass beispielsweise nur die Führungsschiene durch einen Ofen O verläuft und auf der Rücklaufseite RL außerhalb des Ofens zurückgeführt ist. Es wird insoweit auf bekannte Reckanlagen und zugehörige Aufbauten verwiesen.

Nachfolgend wird auf Figur 2 Bezug genommen, in welcher eine Querschnittsdarstellung einer linearmotorgetriebenen Simultan-Reckanlage mit einem zugehörigen Kluppen- und Transportteil gezeigt ist.

Aus Figur 2 ist also eine Kluppen-Transporteinheit T zu ersehen, welche ein sogenanntes Kluppenteil 6 und das sogenannte Transportteil 7 umfasst. Das Kluppenteil 6 ist mit dem Transportteil 7 über eine sogenannte Brücke 8 verbunden. Je nach Sichtweise kann die Kluppen-Brücke 8 zum Transport- oder zum Kluppenteil hinzugerechnet werden.

Das Kluppenteil umfasst wie üblich einen Kluppenhebel 25c, der teilweise auch als Messerklappe 25c bezeichnet wird. Im Falle einer Folienreckanlage wird ein Film F zwischen der Greiffläche 25d und einem Kluppentisch 25e fixiert, d.h. eingeklemmt und festgehalten.

Ein U-förmig geformtes Magnetschlussteil 25g sorgt für das Öffnen und Schließen des Kluppenhebels und damit für das Einklemmen bzw. Freilassen des Films zusammen mit einer entsprechenden nicht dargestellten Einrichtung nach dem Stand der Technik.

Der eigentliche Aufbau der linearmotorgetriebenen Simultan-Reckanlage mit dem entsprechenden Linearmotorantrieb ist beispielsweise aus der EP 0 455 632 B1 oder der DE 44 36 676 C2 als bekannt zu entnehmen, auf deren Offenbarungsgehalt in vollem Umfang Bezug genommen wird. Die anhand von Figur 2 im Querschnitt gezeigte Darstellung gibt die Führungs- und Tragschiene 15 wieder.

Im erläuterten Ausführungsbeispiel laufen auf jeder Lauffläche jeweils zumindest ein Paar von Laufrollen 505, nämlich ein oben liegendes Laufrollenpaar 505a, die um eine Horizontalachse drehen. Über dieses Laufrollenpaar wird das gesamte Gewicht des zugehörigen Transportteiles mit dem damit verbundenen Kluppenteil aufgenommen und abgestützt.

Dieses Rollenpaar 505b dient lediglich der Lauf-Sicherheit.

Schließlich ist auch noch auf der Kluppenseite ein Rollenpaar 505c und gegenüberliegend ein Rollenpaar 505d vorgesehen, das an den betreffenden vertikalen Laufflächen 15c und 15d abrollt. Darüber ist das Transportteil 7 geführt und gelagert. Die entsprechende Führungsschiene 15 ist über mehrere in Längsrichtung der Führungsschiene versetzt liegende Horizontalträger in Abständen gehalten, die jeweils in dem kluppenabseitig liegenden Freiraum 401 zwischen dem oberen und unteren Laufrad 505d verlaufen und mit der Führungsschiene fest verbunden sind.

Das entsprechende Transportteil wird über Linearmotoren angetrieben, die ortsfeste Primärteile 502 und mit den Kluppen-Transportteilen T mitbewegliche Sekundärteile 503 umfassen. Mit anderen Worten werden längs der Führungsschiene 15, die hier auch als Transportschiene 15 gleichzeitig dient (Monorail), die Kluppen, also die Kluppe 6, mit den Transportteilen 7 mittels der Primärteile 502 und der Sekundärteile 503 längs verfahren und bewegt.

Die erwähnten Primärteile 502 sind parallel zur Führungs- und Tragschiene 15 angebracht. Die Sekundärteile 503 bestehen aus den erwähnten Permanentmagneten 503a, die in einem jeweiligen Haltekäfig 503b befestigt sind, der wiederum an dem Kluppenkörper 6 gehalten ist.

Wie aus Figur 2 und auch den Folgezeichnungen zu ersehen ist, ist zwischen dem Primär- und Sekundärteil 502, 503 ein (geringer) Abstandsspalt Sp ausgebildet, über welchen hinweg die vom Primärteil erzeugten elektromagnetischen Wellen auf den Permanentmagneten 503a am Transportteil einwirken und dadurch das Transportteil in Vorschubrichtung bewegen.

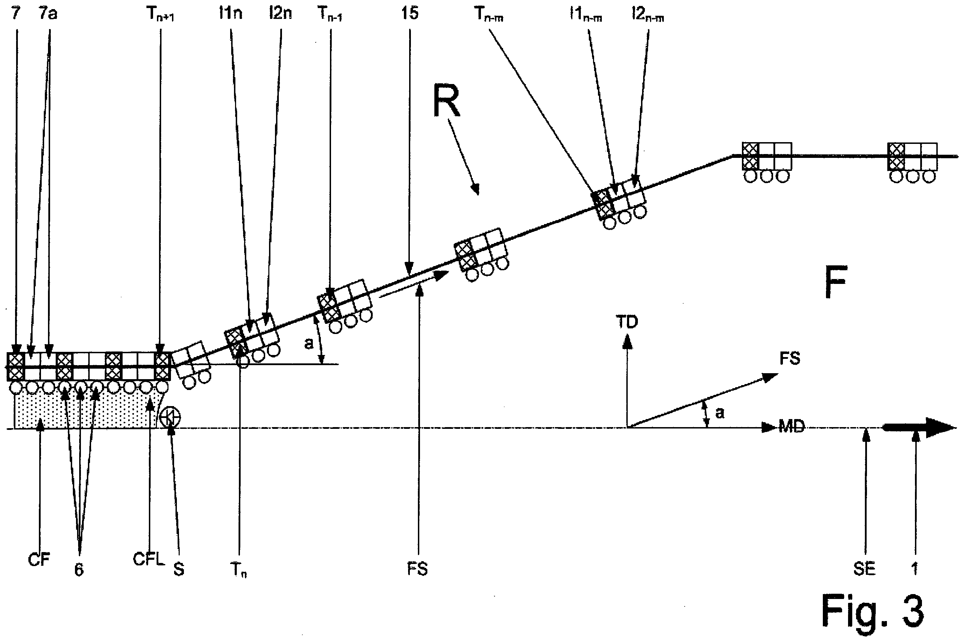

Nachfolgend wird anhand der Figur 1a und der einen schematischen vergrößerten Auszug aus Figur 1a wiedergebenden Figur 3 auf den Anfahrprozess der Reckung einer Materialbahn im Allgemeinen und eines Films (Kunststofffilms) im Besonderen eingegangen. Unter einem Vorfilm sei zum Beispiel ein sogenannter Cast Film CF verstanden, wie er aus einer Flachschlitzdüse extrudiert und abgekühlt wurde, aber auch anderweitig hergestellte und vorbehandelte Materialbahnen, wie uniaxial gereckte Filme, beschichtete Filme usw. können darunter verstande werden.

Beispielsweise wird ein Cast Film CF entsprechend der Darstellung nach Figur 1a in der Einlaufzone ER mit der Breite E in Kluppen 6 (die über Transportteile 7 gehalten und längs der Führungsbahn bzw. Führungsschiene 2 in Verfahrrichtung FS verfahren werden) eingeklemmt und durch eine Vorheizzone PH unter Wärmezufuhr transportiert. In der Regel bestehen die Transporteinheiten T aus zumindest einem angetriebenen Transportteil 7 mit mindestens einem Sekundärteil 503 des Linearmotors (Figur 2). Zusätzlich können nichtangetriebene Transportteile 7a (Idler) zwischen den angetriebenen Transportteilen 7 angeordnet werden, die durch die erfasste Materialbahn F im Allgemeinen und den erläuterten Film F im Besonderen mitbewegt werden können.

Am Ende der Vorheizzone PH erfolgt eine Verstreckung des Filmes in der Maschinenrichtung MD und der Transversalrichtung TD des Filmes in der sog Reckzone R. Die Verstreckung in TD-Richtung (Querrichtung quer oder senkrecht zu der MD-Richtung) erfolgt durch eine Schrägstellung a der Führungsschiene 15.

Die Verstreckung in MD-Richtung erfolgt dadurch, dass die angetriebene Kluppen Tn, n∈N entlang der Führungsschiene 15 gegenüber der jeweils nachfolgenden angetrieben Kluppe Tn-1 beschleunigt wird, bis das gewünschte Reckverhältnis MDx des Filmes in Maschinenrichtung MD erreicht wurde.

Figur 3 zeigt schematisch die Situation beim Anfahren des Vorfilmes CF, wenn der Vorfilm CF, d.h. dessen Anfang CFL z.B. in der aktiv angetriebenen Kluppe Tn+1 eingeklemmt wurde, gerade das Ende der Vorheizzone PH erreicht. Die Kluppen Tn-m, m=1,2,.. wurden bereits dem gewünschten Reckverhältnis MDx beschleunigt. Da in den Kluppen Tn-m noch kein Film eingekluppt wurde, werden die im gezeigten Ausführungsbeispiel jeweils beiden pro angetriebener Kluppe nicht angetriebenen Idler, also nicht angetriebenen Kluppen 7a, die in der Darstellung gemäß Figur 3 dann mit I1n-m und I2n-m bezeichnet werden, einfach mit der angetriebenen Kluppe Tn-m vorwärtsbewegt.

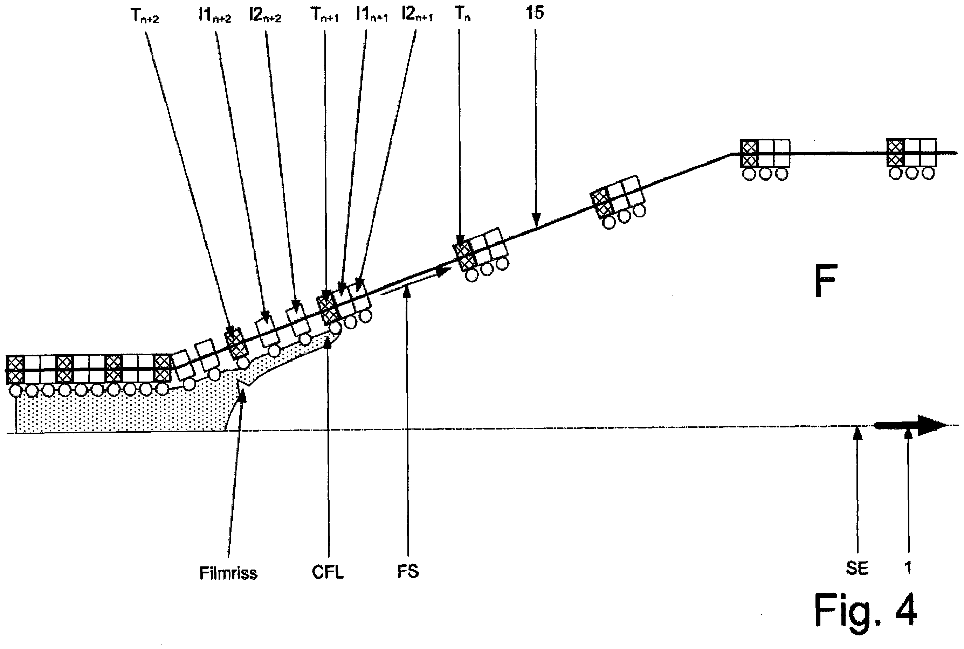

In der Figur 4 ist gezeigt, wie der Filmanfang CFL durch die angetriebene Kluppe Tn+1 beschleunigt und auf der Führungsbahn bzw. Führungsschiene 15 entlang verfahren und längs der Pfeilrichtung FS gereckt wird. Vor der ersten aktiven angetriebenen Kluppe Tn+1, die den Filmanfang CFL erfasst und einklemmt hält, werden die vor dieser aktiv angetriebenen Kluppe Tn+1 befindlichen beiden leerlaufenden und nicht angetriebenen Kluppenwagen (Transporteinheiten T mit den Transportteilen 7 und den darüber gehaltenen Kluppen 6) I1n+1 und I2n+2 (da sie keinen Filmrand eingespannt halten) direkt in Anlage von dem aktiv angetriebenen Kluppenwagen Tn+1 angetrieben und vorwärtsbewegt, wobei sie direkt im Kontakt, d.h. in Anlage zu dem angetriebenen Kluppenwagen stehen. Analoges gilt für die nachfolgenden Kluppen Tn+m, m=1,2,.., die nichtangetriebenen Idler I1n+2 und I2n+2 (es können auch nur ein Idler, oder gar kein Idler vorhanden sein) richten sich entsprechend dem Kraftverlauf im Film aus.

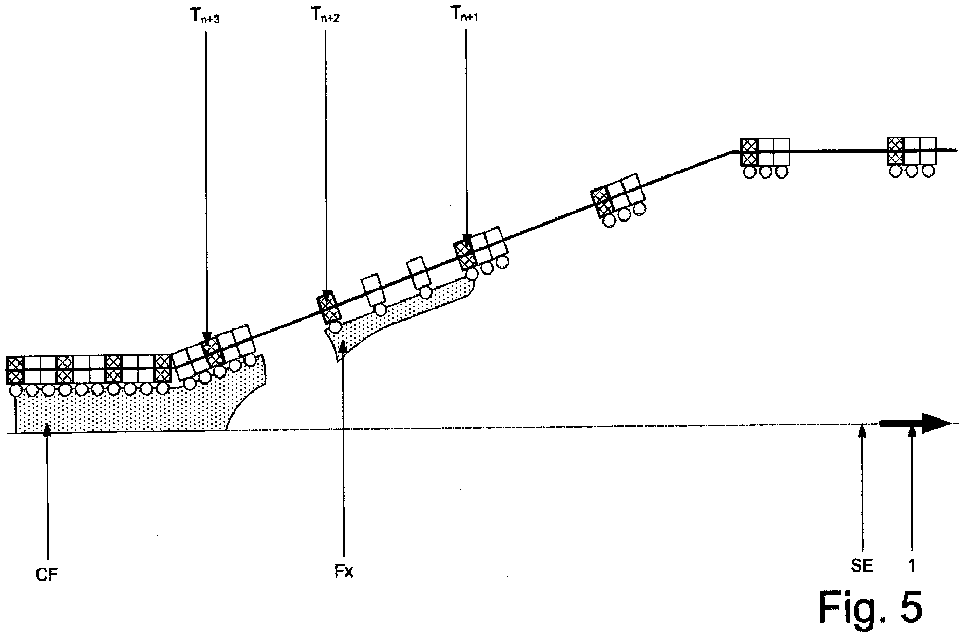

Während dieses anfänglichen Reckvorganges der Materialbahn F kann es allerdings nunmehr zu einem Filmriss kommen (in Figur 5 gezeigt), denn die erläuterten angetriebenen und die Kluppen 6 in der Reckzone R beschleunigenden Transportteile 7 werden übe eine Sinuswelle entlang der Führungsschiene 15 fortbewegt. Die Vorschubkräfte werden dabei durch die erläuterten Primärteile aufgebracht, auf die die an den Transportteilen 7 befestigen Sekundärteile einwirken und damit die Transportteile 7 einschließlich der Sekundärteile und der erwähnten Kluppen auf der Führungsbahn 15 längsverfahren und in der Reckzone entsprechend beschleunigen. Dabei kann wie erläutert entsprechend der Auslegung des Linearmotors eine Materialbahn F lediglich mit einer maximalen Kraft (pull out force) vorwärtsbewegt und gestreckt werden. Es gibt jedoch Fälle, in denen die auf Materialbahn F ausgeübte Kraft größer ist als die maximale Antriebskraft (pull out force) des Linearmotorantriebes. Dies führt letztlich dazu, dass dann beispielsweise eine Kluppe Tn+2 aus der jeweiligen Sinuswelle gerissen wird und in die nächste Sinuswelle des Linearmotors springt. Auch die nachfolgenden Kluppen Tn+2 verlassen dadurch ihre eigentliche Position, was zur Folge hat, dass entweder der Film an einer undefinierbaren Position reißt oder aus der Kluppe gezogen wird. Dies ist beispielhaft in Figur 5 angedeutet, in der ein anfänglich in Längs- und Querrichtung (ND- und DD-Richtung) gereckter Abschnitt CWA des Films an seinem nachlaufenden Ende Fx gerissen ist (wobei der eingeklemmte und beschleunigte Film in Figur 5 nur schematisch angedeutet ist).

Um das System lauffähig zu machen, wird erfindungsgemäß eine Gesamtkluppe LOK aus mehreren angetriebenen vorlaufenden Transporteinheiten T, also zumindest zwei aktiv angetriebenen und vorlaufenden Transporteinheiten T zu der erwähnten Gesamtkluppe LOK zusammengefügt werden, die nachfolgend teilweise als Superkluppe, "Lokomotive" oder Gesamt-Zugeinrichtung genannt wird (Figuren 5 bis 8). Diese Superkluppe oder "Lokomotive" LOK wird in einem Ausführungsbeispiel im Rahmen der Erfindung also wie eine einzelne Kluppe behandelt. Sie wird also vom Beginn der Reckzone R an wie eine einzelne Kluppe 6 durch die gesamte Reckanlage bewegt. Mit anderen Worten wird diese Gesamtkluppe oder diese "Lokomotive" LOK, die wie erläutert mindestens zwei aktiv angetriebene Transporteinheiten TE mit zugehörigen Kluppen 6 umfasst, bis auf die gewünschte Längsreckgeschwindigkeit MDx beschleunigt, durch die Reckzone R und die folgenden Zonen (Auslaufzone A) durchbewegt, um die Materialbahn dann gegebenenfalls noch einer Relaxation zu unterziehen. Nachdem die erläuterte Superkluppe oder die "Lokomotive" LOK die Reckanlage am Auslauf AR verlassen hat, wird die Superkluppe LOK im Rücklauf RL steuerungstechnisch aufgelöst.

Der Anfang des Filmes CFL wird dabei nur in TD-Richtung, aber nicht in MD gestreckt. Nachdem der Kluppenabstand innerhalb der einzelnen Kluppen der Superkluppe LOK minimal ist, wird die MD- und TD-Kraft des Filmes auf mehrere Einzelkluppen verteilt. Das führt dazu, dass die Kraft auf dem führenden Teil des Filmes und die Superkluppe LOK merklich verringert werden kann. Somit ist es möglich, den Anfang des Filmes durch die Reckzone R zu fahren.

Um dies zu erreichen, müssen die einzelnen Zonen im Reckbereich für diese Superkluppe LOK synchronisiert werden, um den Abstand zwischen den Einzelkluppen konstant zu halten und der Superkluppe LOK wie eine einzelne Kluppe dann entlang der Führungsbahn 2, d.h. der Führungsschiene 15 zu beschleunigen bzw. zu bewegen.

In der Figur 5 wird eine derartige Superkluppe LOK bestehend aus den angetrieben Kluppen Tn+3 und Tn+4 und ihren entsprechenden leerlaufenden, nicht-angetriebenen Kluppen I6a bzw. Transportteilen 7a (Idlern) in der Phase ihrer Bildung gezeigt, und zwar nach einem zuvor erfolgten Filmriss.

Da es sich bei dem erläuterten Ausführungsbeispiel um linearmotor-angetriebene Transporteinheiten T mit den Transportteilen 7 und den zugehörigen Kluppen 6 handelt, ist längs der Führungsbahn bzw. Führungsschiene 15 eine Linearmotorstrecke ausgebildet, die das erwähnte sogenannte feststehende Primärteil und die demgegenüber durch die Sekundärteile verfahrbaren Transporteinheiten umfasst. Das sogenannte Primärteil ist dabei in eine Vielzahl hintereinandergeschalteter (verketteter) Zonen gegliedert, die - wie vorstehend ausgeführt - zum Antrieb einer sogenannten Superkluppe LOK entsprechend synchronisiert werden müssen. Die erwähnten Zonen, vor allem die Reckzone wie aber auch der Auslaufzone, umfassen in der Regel bekannterweise Statorwicklungen zur Erzeugung eines Wandermagnetfeldes, worüber die erwähnten Sekundärteile in Form der Transporteinheiten und den zugehörigen Kluppen verfahren werden können. Wie erwähnt umfassen dabei die Sekundärteile üblicherweise Permanentmagnete.

Zur Ansteuerung (mittels einer Ansteuerungs-Einrichtung AE) der einzelnen in Zonen gegliederten Linearsynchronmotor-Wegabschnitte sind den einzelnen Zonen jeweils sogenannte Umrichter oder Frequenzumformer zugeordnet. Ferner ist die Ansteuerungseinrichtung AE mit den Umrichtern oder Frequenzumformern so aufgebaut, dass die Umrichter oder Frequenzumformer eine Ausgangs-, Leistungs- oder Treiberstufe umfassen, oder dass diese Ausgangs-, Leistungs- oder Treiberstufe den einzelnen Umrichtern oder Frequenzumformern nachgeschaltet sind. Diese Umrichter oder Frequenzumformer umfassen zudem in der Regel sogenannte Profilgeneratoren, die in Abhängigkeit eines Zeittaktgebers erzeugte Zeitwerte anhand vorgegebener Daten für einen Phasenwinkel und eine Stromamplitude jeweils zeitabhängig berechnen. Entsprechend werden die einzelnen Statorwicklungen der Primärteile angesteuert. Da insbesondere auch die Reckzone eine Vielzahl derartiger aufeinanderfolgender Ansteuerungszonen umfasst, können die einzelnen Transporteinheiten und die zugehörigen Kluppen mit einem bestimmten Geschwindigkeits- und/oder Beschleunigungsprofil auf Basis eines bestimmten Phasenprofils entsprechend angesteuert werden. Zum weiteren Aufbau zur einer weiteren Funktionsweise eines derartigen Linearmotorantriebes wird auf bekannte Lösungen verwiesen, insbesondere auf die DE 196 34 449 A1, deren Offenbarungsgehalt zum Inhalt der vorliegenden Anmeldung gemacht wird.

### Normalbetrieb:

Im Normalbetrieb ohne den Superclip LOK ist jeweils eine Zone (bzw. ein Frequenzumrichter) für genau eine Aufgabe für alle Transportteile 7 mit den zugehörigen Kluppen 6 zuständig, die ständig wiederholt wird. Jedes mit einem Sekundärteil ausgestattetes und über einen Linearmotorantrieb mit dem Primärteil angetriebenes Transportteil 7 mit zugehöriger Einzelkluppe 6 hat genau die gleiche definierte Reckkurve bzw. das gleiche definierte Bewegungs- und/oder Beschleunigungsprofil abzuarbeiten, welches zonen- oder positionsabhängig ist.

### Erfindungsgemäßer Betrieb:

Mit einem Superclip LOK (also der erläuterten Gesamt-Zugeinrichtung LOK) müssen allerdings mehrere Zonen (Frequenzumrichter) nunmehr miteinander synchronisiert werden, da jetzt mehrere aktiv angetriebene Transportteile 7 mit den jeweils zugehörigen Einzelkluppen 6 gleichzeitig synchronisiert und beschleunigt bzw. bewegt werden müssen. Das Bewegungs- und/oder Beschleunigungsprofil eines einzelnen Transportteiles 7 mit der zugehörigen Einzelkluppe 6 im Rahmen der erläuterten Gesamt- oder Superkluppe LOK ist nun unterschiedlich zur vor- oder nachlaufenden aktiv angetriebenen Transportteilen 7 mit den zugehörigen Kluppen 6 innerhalb des Zuges (was grundsätzlich auch für die sogenannten leerlaufenden, also nicht-angetriebenen Idler gilt). Die unterschiedlichen Reckkurven sind notwendig, um die gebildete Gesamt- oder Superkluppe LOK bilden zu können, und um diese Gesamteinheit LOK synchronisiert vorwärts zu bewegen.

Als Master Drive wird dazu die letzte angetriebene Kluppe in der Gesamtkluppe, also der Superkluppe LOK verwendet (in Figur 5 ist dies die dort separat gekennzeichnete Transporteinheit Tn+4 mit der zugehörigen Kluppe 6n+4), die auch als nachlaufende Kluppe in dem Verband LOK bezeichnet wird. Prinzipiell kann auch jede andere Transporteinheit mit jeder anderen Kluppe im Gesamtverbund LOK die Master-Drive-Aufgabe übernehmen.

Um die Zug-Bildung zu starten, also die Bildung einer Gesamt- oder Super-Zugeinrichtung LOK, ist ein Triggersignal notwendig, das bevorzugt am Einlauf der Reckzone, also am Ende der Vorheizzone PH, durch einen Sensor (z.B. PIN, Cap Sensor usw.) erzeugt werden kann. Ein derartiger Sensor S ist beispielsweise Figur 3 an entsprechender Stelle eingezeichnet.

### Nachdem der Superclip LOK mit den vorlaufenden Transporteinheiten T den Folienanfang CFL (der auch ein neuer Folienanfang CFL nach einem erfolgten Filmriss sein kann) durch die Reckzone R ziehen kann, können mit den nachfolgenden Transporteinheiten T mit den Transportteilen 7 und den Kluppen 6 die normalen Reckprofile gefahren werden, was für die aktiv angetriebenen Transportteile 7 und die zugehörigen Kluppen 6 gilt. Die nichtangetriebenen leerlaufenden Transporteinheiten Ta mit den Transportteilen 7a und den Kluppen 6a (die auch als Idler bezeichnet werden), werden nach dem Ergreifen des Randes 8 der zu reckenden Materialbahn jeweils mit einer Zwischenbeschleunigung in der Reckzone zwischen zwei aktiv angetriebenen Transporteinheiten T wie üblich mitbewegt und beschleunigt.

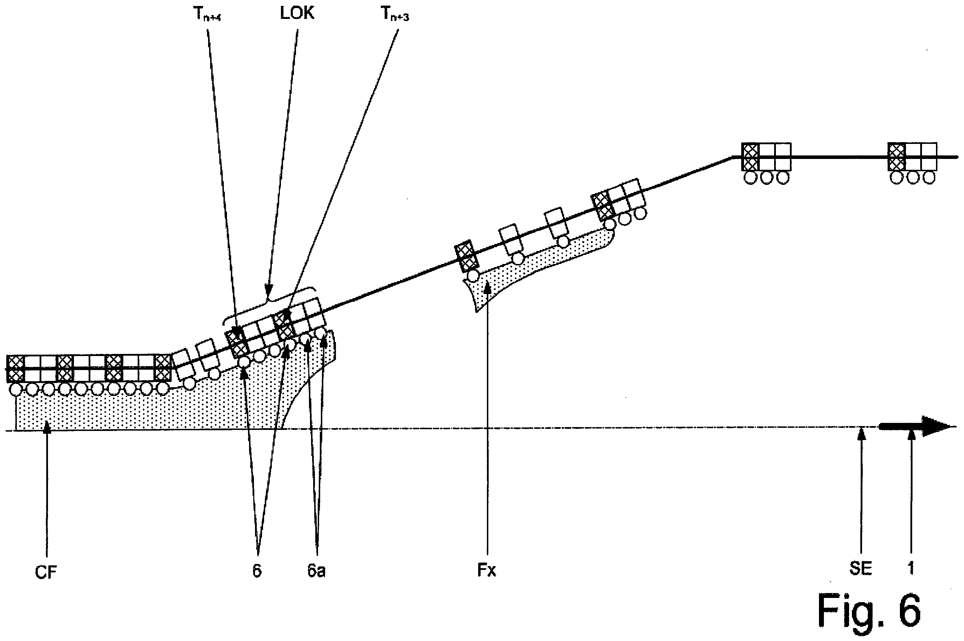

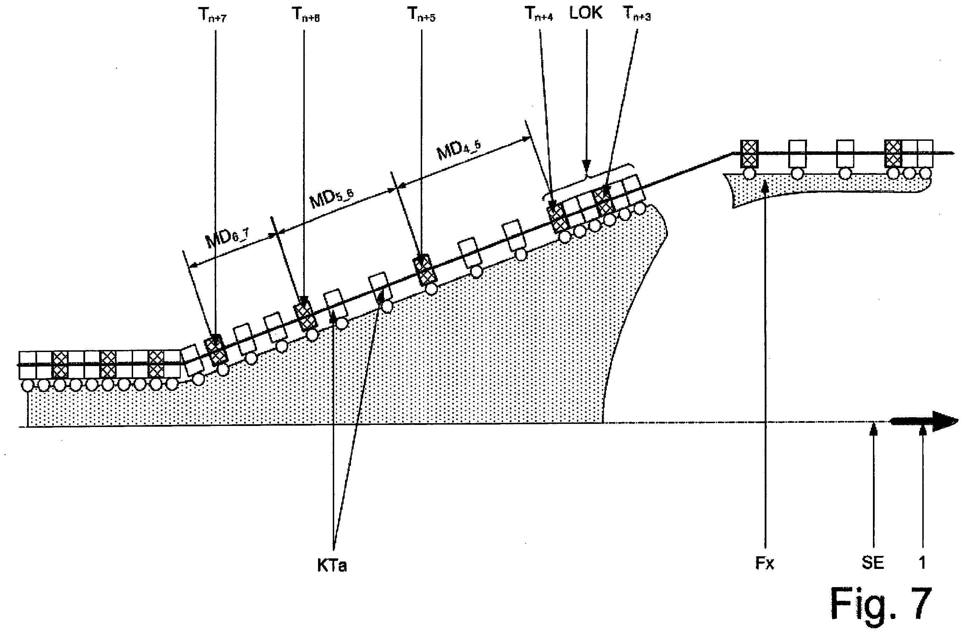

In Figur 7 ist eine Situation zu einem späteren Zeitpunkt als dem in Figur 5 und Figur 6 wiederspiegelnden Zeitpunkt gezeigt, bei welchem die zu einer Gesamtzugeinheit zusammengeschaltete Gesamtkluppe LOK die Reckzone R schon fast ganz durchlaufen hat und die nachfolgenden leerlaufenden Idler 7a bzw. Ta und die nachlaufenden weiteren angetriebenen Transporteinheiten 7 mit üblichem Bewegungs- und Beschleunigungsprofil in der Reckzone angetrieben werden. Dabei sind in Figur 7 die zwischen zwei aufeinander folgenden angetriebenen Transportteilen 7 aufgrund des positions- oder zonenabhängigen Beschleunigungsprofil entstehenden Abstände in Form der entsprechenden MDx-y-Werte für die positions- und/oder zonenabhängigen Abstände eingezeichnet (also jene Abstände die sich deshalb ergeben, weil die entsprechenden aktiv angetriebenen Transporteinheiten T mit den Transportteilen 7 und den Kluppen 6 nicht zu der erwähnten Gesamtzugeinheit LOK zusammengeschaltet sind). Daraus ist zu ersehen, dass mit zunehmender Durchschreitung der Reckzone aufgrund der vom Anfang bis zum Ende der Reckzone zunehmenden Beschleunigung der Abstand zwischen zwei aufeinanderfolgenden aktiv angetriebenen Transporteinheiten T mit den zugehörigen Transportteilen 7 und den zugehörigen Kluppen 6 umso größer ist, je näher ein derartiges Paar aus angetriebenen Transportteilen 7 mit den zugehörigen Kluppen 6 dem Ende der Reckzone R kommt.

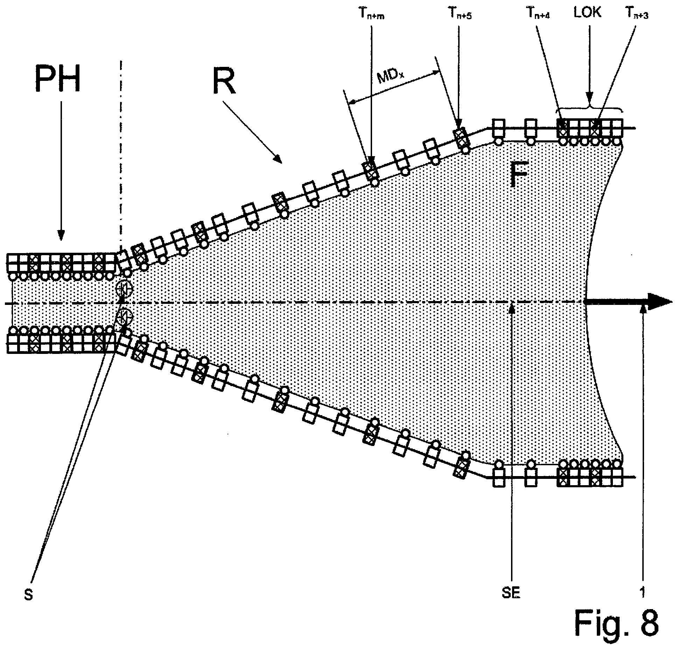

Figur 8 zeigt zusammengefasst die Situation, nachdem die erfindungsgemäße Gesamtzugeinrichtung LOK die Reckzone R verlassen hat.

Dass im Bereich der vorauseilenden Gesamtzugeinheit oder Gesamtkluppe (Superclip) LOK eine Reckung der Materialbahn nur in Querrichtung TD und nicht in Maschinenlängsrichtung MG erfolgt, ist in den Figuren durch Filmwülste 1' angedeutet, die in Abzugsrichtung 1 hintereinanderliegen.

Zusammengefasst kann also festgehalten werden, dass zur Initialisierung eines Reckvorgangs im Bereich eines vorlaufenden Materialbahn-Abschnittes CFL, im erläuterten Ausführungsbeispiel in Form des erwähnten Vorfilmes CFL eine Gesamtkluppen-Zugeinrichtung LOK im Sinne einer Gesamtkluppe gebildet wird, die mehr als eine einzelne ansonsten einzeln ansteuerbare Transporteinheit 7 / Kluppe 6 umfasst. Diese vorlaufende Gesamtkluppen-Zugeinrichtung LOK wird im Rahmen der Erfindung als eine quasi zusammenhängende, üblicherweise sich berührende Einheit mit einem im erläuterten Ausführungsbeispiel gemeinsamen definierten Bewegungsprofil (Reckprofil) beschleunigt und durch die Reckanlage zumindest bis zum Auslaufende und insbesondere die Reckzone R bewegt. Die auf diese Gesamtzugeinrichtung LOK folgenden Einzelkluppen (sowohl die angetriebenen aktiven Einzelkluppen 6 und zugehörigen Transportteile 7 sowie die nicht-angetriebenen Kluppen 6a mit den zugehörigen nicht-angetriebenen Transporteinheiten 7a) werden wie im Normalbetrieb durch die Anlage bewegt.

Im gezeigten Ausführungsbeispiel ist eine Gesamtzugeinrichtung unter Verwendung von zwei aktiv angetriebenen vorlaufenden Transportteilen 7 mit zugehörigen Kluppen 6 gewählt worden. Die Anzahl kann aber unterschiedlich gewählt werden, mit anderen Worten können beispielsweise 3, 4 oder mehr einzelne aktiv angetriebene Transporteinheiten T mit zugehörigen Kluppen 6 zu einer Gesamtkluppen-Zugeinrichtung LOK zusammengefasst werden.

Ebenso kann die erläuterte vorlaufende Gesamtkluppen-Zugeinrichtung LOK nur unter Verwendung von aktiv angetriebenen Transportteilen 7 mit zugehörigen Kluppen 6 gebildet werden. Möglich ist auch, dass zwischen zwei aktiv angetriebenen Transportteilen 7 nur jeweils ein nicht-angetriebenes vorlaufendes Transportteil 7a mit zugehöriger nicht-angetriebener Kluppe 6a sitzt. Aber auch hier können mehrere Idler eingesetzt werden, beispielsweise zwei, drei oder mehrere nicht-angetriebene Transporteinheiten Ta mit Transportteilen 7a mit zugehörigen Kluppen 6a. Das erläuterte Ausführungsbeispiel ist für zwei Idler, also leerlaufende Transportteile 7a mit zugehörigen Kluppen 6a zwischen zwei Transportteilen 7 erläutert worden.

Das erläuterte Reckprofil kann innerhalb der Reckzone R beliebig gewählt werden.

Nach Verlassen der Behandlungsstrecke wird nach dem Auslauf AR die Gesamtzugeinrichtung LOK aufgelöst und die einzelnen Transportteile mit zugehörigen Einzelkluppen werden wie im Normalbetrieb angesteuert.

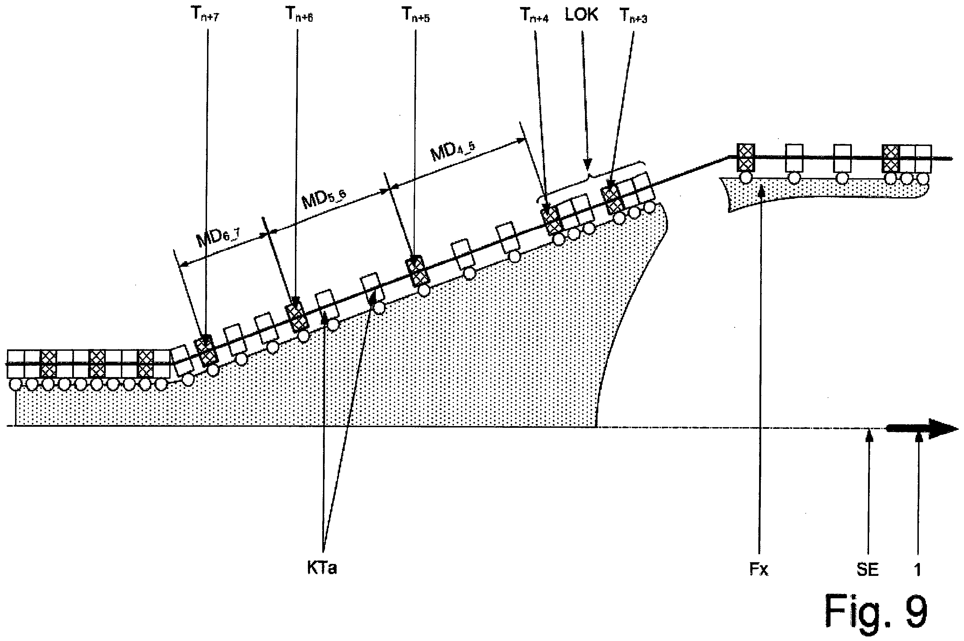

Nachfolgend wird auf ein abgewandeltes Ausführungsbeispiel Bezug genommen, und zwar unter Bezugnahme auf Figur 9, welches ein abgewandeltes schematisches Ausführungsbeispiel zu Figur 7 wiedergibt.

Auch in diesem Ausführungsbeispiel wird ein vorlaufender anfänglicher Abschnitt einer zu reckenden Materialbahn, im Konkreten ein anfänglicher Filmabschnitt CWL, nicht der im Normalbetrieb auftretenden vom Reckzonenanfang bis zum Reckzonenende zunehmenden Beschleunigung in Längsrichtung MD unterzogen. Abweichend zu den vorausgegangenen Ausführungen, bei denen eine Gesamtzugeinrichtung LOK gebildet wurde (in deren Bereich eine Längsreckung in MD-Reckrichtung völlig unterbleibt), ist bei dem Ausführungsbeispiel vorgesehen, dass hier zwischen zumindest zwei aufeinanderfolgenden vorlaufenden aktiven, d.h. angetriebenen Transporteinheiten T mit Transportteilen 7 mit zugehörigen Kluppen 6 ein anderes Beschleunigungsprofil in Anwendung gelangt. Hier kommt ein Beschleunigungsprofil zum Tragen, bei welchem bzgl. eines durch die Reckzone R hindurchgeführten anfänglichen Materialbahnabschnittes CWL eine gegenüber dem Normalbetrieb geringere relative Beschleunigung durchgeführt wird, mit der Folge, dass der entsprechende MDx-y-Wert zumindest zwischen den beiden ersten aufeinanderfolgenden und somit vorlaufenden aktiv angetriebenen Transeinheiten T mit den Transportteilen 7 und den zugehörigen Kluppen 6 kleiner ist als ein üblicher von der Position (Zone) innerhalb der Reckzone R abhängiger und ein Maß für die Beschleunigung darstellender Abstand MD zwischen zwei aufeinanderfolgenden angetriebenen Transportteilen/Kluppen, wie anhand von Figur 7 unter Wiedergabe des Wertes MD4-5, MD5-6 bzw. MD6-7 wiedergegeben ist.

Mit anderen Worten wird das Anfahren der linearmotorangetriebenen Simultan-Reckanlage so durchgeführt, dass beim Anfahren der Materialbahn F in die Reckzone R hinein zumindest zwei aufeinanderfolgende und über den Linearmotor angetriebene vorlaufende Kluppen 6 in der Reckzone R von dem Normalbetrieb-Beschleunigungsprofil abweichend so beschleunigt werden, dass der zwischen den zumindest beiden aufeinanderfolgenden linearmotorgetriebenen Kluppen 6 gebildete Abstand MDa-b kleiner ist als 80% oder 75%, insbesondere kleiner ist als 70%, 60%, 50%, 40%, 30%, 20% und insbesondere kleiner als 10% verglichen mit dem entsprechenden positions- und/oder zonenabhängigen Abstand MDx-y im Normalbetrieb.

## Patentansprüche

1. Verfahren zum Betrieb einer linearmotor-angetriebenen Simultan-Reckanlage, insbesondere Kunststofffolien-Simultan-Reckanlage, mit folgenden Merkmalen:
- längs einer Führungsbahn (2) und/oder einer Transportschiene (15) werden mit Transportteilen (7) und darüber gehaltenen Kluppen (6) ausgestattete Transporteinheiten (T) mittels eines Linearmotorantriebs längs verfahren,
- mittels der Kluppen (6) wird der Rand (8) einer Materialbahn (F) erfasst und gehalten,
- im Normalbetrieb werden die linearmotor-angetriebenen Transporteinheiten (T) in der Simultan-Reckzone (R) einer Beschleunigungsphase mit einem NormalBetrieb-Beschleunigungsprofil unter zunehmender Vergrößerung des Abstandes (MDx-y) zu einer nachfolgenden über den Linearmotorantrieb angetriebenen Transporteinheit (T) unterzogen,
**gekennzeichnet durch** die folgenden weiteren Merkmale:
- beim Anfahren der Materialbahn (F) in die Reckzone (R) hinein werden zumindest zwei aufeinander folgende und über den Linearmotor angetriebene vorlaufende Kluppen (6) in der Reckzone (R) von dem Normalbetrieb-Beschleunigungsprofil abweichend so beschleunigt, dass der zwischen den zumindest beiden aufeinander folgenden linearmotor-getriebenen Kluppen (6) gebildete Abstand (MDa-b) kleiner als 80% oder kleiner als 75% des im Normalbetrieb bewirkten Abstandes (MDx-y) ist.

2. Verfahren zum Betrieb einer linearmotor-angetriebenen Simultan-Reckanlage nach Anspruch 1, **dadurch gekennzeichnet, dass** die Ansteuerung der zumindest beiden eine Materialbahn (F) in die Reckzone (R) hineinziehenden und aktiv antreibenden Kluppeneinheiten (T) derart erfolgt, dass der Abstand (MDa-b) zwischen den zumindest beiden aufeinander folgenden und über den Linearmotorantrieb angetriebenen Kluppen (6) im Bereich der Reckzone (R) kleiner als 70%, insbesondere kleiner als 60%, 50%, 40%, 30%, 20% und insbesondere kleiner als 10% verglichen mit dem entsprechenden positions- und/oder zonenabhängigen Abstand (MDx-y) im Normalbetrieb ist.

3. Verfahren zum Betrieb einer linearmotor-angetriebenen Simultan-Reckanlage nach Anspruch 1 oder 2, **dadurch gekennzeichnet, dass** die zumindest beiden aufeinander folgenden und über einen Linearmotorantrieb angetriebenen Kluppen (6) in der Reckzone (R) mit gleicher Geschwindigkeit und Beschleunigung bei unverändertem Abstand (MDa-b) zueinander angetrieben werden.

4. Verfahren zum Betrieb einer linearmotor-angetriebenen Simultan-Reckanlage nach einem der Ansprüche 1 bis 3, **dadurch gekennzeichnet, dass** die Ansteuerung so vorgenommen wird, dass zwei über einen Linearmotor angetriebene Transporteinheiten (T) mit den zugehörigen Kluppen (6) unter gegenseitiger Berührung bei einem auf 0 reduzierten Abstand zumindest 80% oder 90% oder 100% der Simultan-Reckzone (R) durchlaufen.

5. Verfahren zum Betrieb einer linearmotor-angetriebenen Simultan-Reckanlage nach einem der Ansprüche 1 bis 4, **dadurch gekennzeichnet, dass** zwischen zwei aufeinander folgenden und über den Linearmotor angetriebenen vorlaufenden Transporteinheiten (T) mit den zugehörigen Kluppen (6) zumindest eine oder zumindest zwei nichtangetriebene vorlaufende Transporteinheiten (Ta) mit den zugehörigen nicht-angetriebenen Kluppen (6a) aufeinander folgend mitverfahren werden.

6. Verfahren zum Betrieb einer linearmotor-angetriebenen Simultan-Reckanlage nach einem der Ansprüche 1 bis 5, **dadurch gekennzeichnet, dass** die zumindest beiden aufeinander folgenden und über einen Linearmotorantrieb angetriebenen vorlaufenden Transporteinheiten (T) und die gegebenenfalls zwischen diesen angetriebenen Transporteinheiten (T) vorgesehene zumindest eine nichtangetriebene vorlaufende Transporteinheit (Ta) mit zugehörigen Kluppen (6a) als Gesamt-Zugeinrichtung (LOK) die Reckzone (R) und vorzugsweise die Auslaufzone (A) gemeinsam durchlaufen.

7. Verfahren zum Betrieb einer linearmotor-angetriebenen Simultan-Reckanlage nach Anspruch 6, **dadurch gekennzeichnet, dass** die Gesamt-Zugeinrichtung (LOK) die Reckzone (R) mit einem Beschleunigungsprofil durchläuft, welches dem Beschleunigungsprofil der letzten nachlaufenden und zur Gesamt-Zugeinrichtung (LOK) gehörenden Transporteinheit (T) entspricht.

8. Simultan-Reckanlage, insbesondere Kunststofffolien-Simultan-Reckanlage, zur Durchführung des Verfahrens insbesondere nach einem der Ansprüche 1 bis 7, mit folgenden Merkmalen:
- mit einer Führungsbahn (2) und/oder einer Transportschiene (15), längs der Transporteinheiten (T) mit Transportteilen (7) und darüber gehaltenen Kluppen (6) mittels eines Linearmotorantriebs längs verfahrbar sind,
- die Kluppen (6) umfassten jeweils eine Einspanneinrichtung zur Fixierung eines Randes (8) einer Materialbahn (F),
- der Linearmotorantrieb umfasst mit dem Transportteil (7) verfahrbare und daran fest angebrachte oder ausgebildete Sekundärteile (503) vorzugsweise in Form von Permanentmagneten (503a) und in einem Abstandsspalt (Sp) dazu feststehende Primärteile (502) zur Erzeugung von elektromagnetischen Feldern, wobei die Primärteile (502) an einer Motor-Angriffsseite (MA) der Sekundärteile (503) unter Fortbewegung der Sekundärteile (503) ansetzen,
- die Primärteile (502) umfassen eine Vielzahl von hintereinander geschalteten Zonen mit Statorwicklungen, die in unterschiedlichen Phasenwinkeln oder mit unterschiedlichen Phasenwinkeln und vorwählbaren Stromamplituden antreibbar sind,
- mit einer Ansteuerungs-Einrichtung (AE) mit Umrichtern oder Frequenzumformern, die eine Ausgangs-, Leistungs- oder Treiberstufe umfassen oder denen eine Ausgangs-, Leistungs- oder Treiberstufe nachgeschaltet ist, und
- die Ansteuerungseinrichtung (AE) ist so aufgebaut, dass im Normalbetrieb die linearmotor-angetriebenen Sekundärteile (503) in der Simultan-Reckzone (R) einer Beschleunigungsphase mit einem NormalBetrieb-Beschleunigungsprofil unter zunehmender Vergrößerung des Abstandes (MDx-y) zu einer nachfolgenden über den Linearmotorantrieb angetriebenen Transporteinheit (T) antreibbar sind, **gekennzeichnet durch** die folgenden weiteren Merkmale
- die Ansteuerungs-Einheit (AE) ist so aufgebaut und angepasst, dass beim Anfahren der Materialbahn (F) in die Reckzone (R) hinein zumindest zwei aufeinander folgende und über den Linearmotor angetriebene vorlaufende Kluppen (6) in der Reckzone (R) von dem Normalbetrieb-Beschleunigungsprofil abweichend so beschleunigt werden, dass der zwischen den zumindest beiden aufeinander folgenden linearmotorgetriebenen Kluppen (6) gebildete Abstand (MDa-b) kleiner als 75% des im Normalbetrieb bewirkten Abstandes (MDx-y) kleiner als 80% oder kleiner als 75% des im Normalbetrieb bewirkten Abstandes (MDx-y) ist.

9. Simultan-Reckanlage nach Anspruch 8, **dadurch gekennzeichnet, dass** die Ansteuerungs-Einrichtung (AE) so aufgebaut und angepasst ist, dass der Abstand (MDa-b) zwischen den zumindest beiden aufeinander folgenden und über den Linearmotorantrieb angetriebenen vorlaufenden Kluppen (6) im Bereich der Reckzone (R) kleiner als 70%, insbesondere kleiner als 60%, 50%, 40%, 30%, 20% und insbesondere kleiner als 10% verglichen mit dem entsprechenden positions- und/oder zonenabhängigen Abstand (MDx-y) im Normalbetrieb ist.

10. Simultan-Reckanlage nach Anspruch 8 oder 9, **dadurch gekennzeichnet, dass** die Ansteuerungs-Einrichtung (AE) so aufgebaut und angepasst ist, dass die zumindest beiden aufeinander folgenden und über einen Linearmotorantrieb angetriebenen Kluppen (6) in der Reckzone (R) mit gleicher Geschwindigkeit und Beschleunigung bei unverändertem Abstand (MDa-b) zueinander angetrieben werden.

11. Simultan-Reckanlage nach einem der Ansprüche 8 bis 10, **dadurch gekennzeichnet, dass** die Ansteuerungs-Einrichtung (AE) so aufgebaut und angepasst ist, dass zwei über einen Linearmotor angetriebene Transporteinheiten (T) mit den zugehörigen Kluppen (6) unter gegenseitiger Berührung bei einem auf 0 reduzierten Abstand zumindest 80% oder 90% oder 100% der Simultan-Reckzone (R) durchlaufen.

12. Simultan-Reckanlage nach einem der Ansprüche 8 bis 11, **dadurch gekennzeichnet, dass** zwischen zwei aufeinander folgenden und über den Linearmotor angetriebenen vorlaufenden Transporteinheiten (T) mit den zugehörigen Kluppen (6) zumindest eine oder zumindest zwei nichtangetriebene vorlaufende Transporteinheiten (Ta) mit zugehörigen nicht-angetriebenen Kluppen (6a) aufeinander folgend angeordnet sind.

13. Simultan-Reckanlage nach einem der Ansprüche 8 bis 12, **dadurch gekennzeichnet, dass** die Ansteuerungseinrichtung (AE) so aufgebaut und angepasst ist, dass die zumindest beiden aufeinander folgenden und über einen Linearmotorantrieb angetriebenen vorlaufenden Transporteinheiten (T) und die gegebenenfalls zwischen diesen angetriebenen Transporteinheiten (T) vorgesehene zumindest eine nicht-angetriebene vorlaufende Transporteinheit (Ta) mit zugehörigen Kluppen (6a) als gemeinsam angetriebene Gesamt-Zugeinrichtung (LOK) die Reckzone (R) und vorzugsweise die Auslaufzone (A) durchlaufen.

14. Simultan-Reckanlage nach Anspruch 13, **dadurch gekennzeichnet, dass** die Ansteuerungseinheit (AE) so aufgebaut und gepasst ist, dass die Gesamt-Zugeinrichtung (LOK) die Reckzone (R) mit einem Beschleunigungsprofil durchläuft, welches dem Beschleunigungsprofil der letzten nachlaufenden und zur Gesamt-Zugeinrichtung (LOK) gehörenden Transporteinheit (T) entspricht.

## Claims

1. Method for operating a linear-motor-driven simultaneous stretching system, in particular a plastics film simultaneous stretching system, comprising the following features:
- transport units (T) equipped with transport parts (7) and clips (6) held by said transport parts are moved along a guide track (2) and/or a transport rail (15) by means of a linear motor drive,
- the edge (8) of a material web (F) is grasped and held by means of the clips (6),
- during normal operation, the linear-motor-driven transport units (T) in the simultaneous stretching zone (R) are subjected to an acceleration phase having a normal operation acceleration profile, as the distance (MDx-y) to a subsequent transport unit (T) driven by the linear motor drive increases, **characterised by** the following additional features:
- when the material web (F) enters into the stretching zone (R), at least two successive leading clips (6) in the stretching zone (R) that are driven by the linear motor are accelerated in a manner deviating from the normal operation acceleration profile such that the distance (Mda-b) formed between the at least two successive linear-motor-driven clips (6) is less than 80% or less than 75% of the distance (MDx-y) which results during normal operation.

2. Method for operating a linear-motor-driven simultaneous stretching system according to claim 1, **characterised in that** the at least two clip units (T) which pull a material web (F) into the stretching zone (R) and actively drive said material web are controlled such that, in the region of the stretching zone (R), the distance (Mda-b) between the at least two successive clips (6) driven by the linear motor drive is less than 70%, in particular less than 60%, 50%, 40%, 30%, 20% and in particular less than 10%, compared to the corresponding position-dependent and/or zone-dependent distance (MDx-y) during normal operation.

3. Method for operating a linear-motor-driven simultaneous stretching system according to either claim 1 or claim 2, **characterised in that** the at least two successive clips (6) driven by a linear motor drive are driven in the stretching zone (R) at the same speed and acceleration at an unchanged distance (Mda-b) from one another.

4. Method for operating a linear-motor-driven simultaneous stretching system according to any of claims 1 to 3, **characterised in that** the control is carried out such that two linear-motor-driven transport units (T) having the associated clips (6) pass through at least 80% or 90% or 100% of the simultaneous stretching zone (R) in contact with one another, at a distance which is reduced to 0.

5. Method for operating a linear-motor-driven simultaneous stretching system according to any of claims 1 to 4, **characterised in that** at least one or at least two non-driven leading transport units (Ta) having the associated non-driven clips (6a) are moved in succession between and together with two successive linear-motor-driven leading transport units (T) having the associated clips (6).

6. Method for operating a linear-motor-driven simultaneous stretching system according to any of claims 1 to 5, **characterised in that** the at least two successive linear-motor-driven leading transport units (T) and the at least one non-driven leading transport unit (Ta) having associated clips (6a), which is optionally provided between said driven transport units (T), pass through the stretching zone (R) and preferably the outlet zone (A) together, as an overall pulling device (LOK).

7. Method for operating a linear-motor-driven simultaneous stretching system according to claim 6, **characterised in that** the overall pulling device (LOK) passes through the stretching zone (R) so as to have an acceleration profile which corresponds to the acceleration profile of the last trailing transport unit (T) which is part of the overall pulling device (LOK).

8. Simultaneous stretching system, in particular a plastics film simultaneous stretching system, for carrying out the method, in particular according to any of claims 1 to 7, comprising the following features:
- comprising a guide track (2) and/or a transport rail (15), along which transport units (T) having transport parts (7) and clips (6) held thereby can be moved by means of a linear motor drive,
- the clips (6) each comprised a clamping means for fixing an edge (8) of a material web (F),
- the linear motor drive comprises secondary parts (503), preferably in the form of permanent magnets (503a), which can be moved together with the transport part (7) and are fixedly attached thereto or formed thereon, and primary parts (502) for generating electromagnetic fields, which primary parts are fixed at a gap (Sp) from said secondary parts, the primary parts (502) attaching to a motor engagement side (MA) of the secondary parts (503) while advancing the secondary parts (503),
- the primary parts (502) comprise a plurality of zones which are connected in series and have stator windings which can be driven at different phase angles or with different phase angles and pre-selectable current amplitudes,
- comprising a control device (AE) having converters or frequency converters which include an output stage, power stage or driver stage or downstream of which an output stage, power stage or driver stage is connected, and
- the control device (AE) is constructed such that, during normal operation, the linear-motor-driven secondary parts (503) can be driven in the simultaneous stretching zone (R) of an acceleration phase having a normal operation acceleration profile, as the distance (MDx-y) to a subsequent transport unit (T) driven by the linear motor drive increases, **characterised by** the following additional features
- the control unit (AE) is constructed and adapted such that, when the material web (F) enters into the stretching zone (R), at least two successive leading clips (6) in the stretching zone (R) that are driven by the linear motor are accelerated in a manner deviating from the normal operation acceleration profile such that the distance (Mda-b) formed between the at least two successive linear-motor-driven clips (6) is less than 75% of the distance (MDx-y) which results during normal operation, less than 80% or is less than 75% of the distance which results during normal operation (MDx-y).

9. Simultaneous stretching system according to claim 8, **characterised in that** the control device (AE) is constructed and adapted such that, in the region of the stretching zone (R), the distance (MDa_b) between the at least two successive leading clips (6) driven by the linear motor drive is less than 70%, in particular less than 60%, 50%, 40%, 30%, 20% and in particular less than 10%, compared to the corresponding position-dependent and/or zone-dependent distance (MDx_y) during normal operation.

10. Simultaneous stretching system according to either claim 8 or claim 9, **characterised in that** the control device (AE) is constructed and adapted such that the at least two successive clips (6) driven by a linear motor drive are driven in the stretching zone (R) at the same speed and acceleration at an unchanged distance (MDa_b) from one another.

11. Simultaneous stretching system according to any of claims 8 to 10, **characterised in that** the control device (AE) is constructed and adapted such that two linear-motor-driven transport units (T) having the associated clips (6) pass through at least 80% or 90% or 100% of the simultaneous stretching zone (R) in contact with one another, at a distance reduced to 0.

12. Simultaneous stretching system according to any of claims 8 to 11, **characterised in that** at least one or at least two non-driven leading transport units (Ta) having associated non-driven clips (6a) are arranged in succession between two successive linear-motor-driven leading transport units (T) having the associated clips (6).

13. Simultaneous stretching system according to any of claims 8 to 12, **characterised in that** the control device (AE) is constructed and adapted such that the at least two linear-motor-driven successive leading transport units (T) and the at least one non-driven leading transport unit (Ta) having associated clips (6a), which is optionally provided between said driven transport units (T), pass through the stretching zone (R) and preferably the outlet zone (A) as a jointly driven overall pulling device (LOK).

14. Simultaneous stretching system according to claim 13, **characterised in that** the control unit (AE) is constructed and fitted such that the overall pulling device (LOK) passes through the stretching zone (R) so as to have an acceleration profile which corresponds to the acceleration profile of the last trailing transport unit (T) which is part of the overall pulling device (LOK).

## Revendications

1. Procédé pour faire fonctionner une installation d'étirage simultané entraînée par moteur linéaire, en particulier une installation d'étirage simultané de feuilles en matière plastique, présentant les éléments suivants :
- des unités de transport (T) équipées de parties de transport (7) et de pinces (6) maintenues sur celles-ci sont déplacées longitudinalement au moyen d'un entraînement par moteur linéaire le long d'une voie de guidage (2) et/ou d'un rail de transport (15),
- le bord (8) d'une bande de matériau (F) est saisi et maintenu au moyen des pinces (6),
- en fonctionnement normal, dans la zone d'étirage simultané (R), les unités de transport (T) entraînées par moteur linéaire sont soumises à une phase d'accélération présentant un profil d'accélération en fonctionnement normal avec augmentation croissante de la distance (MDx_y) par rapport à une unité de transport suivante (T) entraînée par l'entraînement à moteur linéaire,
**caractérisé par** les autres éléments suivants :
- lors de l'approche de la bande de matériau (F) jusque dans la zone d'étirage (R), au moins deux pinces (6) successives en avance, entraînées par moteur linéaire, sont accélérées dans la zone d'étirage (R) en s'écartant du profil d'accélération en fonctionnement normal de telle sorte que la distance (MDa_b) formée entre lesdites au moins deux pinces (6) successives entraînées par le moteur linéaire est inférieure à 80% ou inférieure à 75% de la distance (MDx_y) assurée en fonctionnement normal.

2. Procédé pour faire fonctionner une installation d'étirage simultané entraînée par moteur linéaire selon la revendication 1,
**caractérisé en ce que**
le pilotage desdites au moins deux unités à pinces (T) tirant une bande de matériau (F) dans la zone d'étirage (R) et l'entraînant activement s'effectue de telle sorte que la distance (MDa_b) entre lesdites au moins deux pinces successives (6) entraînées par l'entraînement à moteur linéaire au niveau de la zone d'étirage (R) est inférieure à 70%, en particulier inférieure à 60%, 50%, 40%, 30%, 20% et en particulier inférieure à 10% par comparaison à la distance correspondante (MDx_y) dépendante de la position et/ou de la zone en fonctionnement normal.

3. Procédé pour faire fonctionner une installation d'étirage simultané entraînée par moteur linéaire selon la revendication 1 ou 2,
**caractérisé en ce que**
lesdites au moins deux pinces successives (6) entraînées par un entraînement à moteur linéaire sont entraînées dans la zone d'étirage (R) à la même vitesse et à la même accélération avec une distance (MDa_b) inchangée l'une par rapport à l'autre.

4. Procédé pour faire fonctionner une installation d'étirage simultané entraînée par moteur linéaire selon l'une des revendications 1 à 3, **caractérisé en ce que**
le pilotage est effectué de telle manière que deux unités de transport (T) entraînées par un moteur linéaire et munies des pinces (6) associées en contact mutuel à une distance réduite à 0 traversent au moins 80 % ou 90 % ou 100 % de la zone d'étirage simultané (R).

5. Procédé pour faire fonctionner une installation d'étirage simultané entraînée par moteur linéaire selon l'une des revendications 1 à 4, **caractérisé en ce que**
entre deux unités de transport successives (T) en avance, entraînées par le moteur linéaire et munies des pinces associées (6), au moins une ou au moins deux unités de transport (Ta) en avance non entraînées et munies des pinces associées (6a) non entraînées sont co-déplacées successivement.

6. Procédé pour faire fonctionner une installation d'étirage simultané entraînée par moteur linéaire selon l'une des revendications 1 à 5, **caractérisé en ce que**
lesdites au moins deux unités de transport successives (T) en avance et entraînées par un entraînement à moteur linéaire, et ladite au moins une unité de transport (Ta) en avance non entraînée, le cas échéant prévue entre ces unités de transport (T) entraînées, et munie des pinces associées (6a) traversent ensemble la zone d'étirage (R) et de préférence la zone de sortie (A), en tant que dispositif de traction global (LOK).

7. Procédé pour faire fonctionner une installation d'étirage simultané entraînée par moteur linéaire selon la revendication 6,
**caractérisé en ce que**
le dispositif de traction global (LOK) traverse la zone d'étirage (R) avec un profil d'accélération qui correspond au profil d'accélération de la dernière unité de transport (T) en retard faisant partie du dispositif de traction global (LOK).

8. Installation d'étirage simultané, en particulier installation d'étirage simultané de feuilles en matière plastique, pour mettre en œuvre le procédé en particulier selon l'une des revendications 1 à 7, présentant les éléments suivants :
- une voie de guidage (2) et/ou un rail de transport (15), le long de laquelle/duquel des unités de transport (T) avec des parties de transport (7) et des pinces (6) maintenues sur celles-ci peuvent être déplacées longitudinalement au moyen d'un entraînement à moteur linéaire,
- les pinces (6) comportent chacune un dispositif de serrage pour fixer un bord (8) d'une bande de matériau (F),
- l'entraînement à moteur linéaire comprend des parties secondaires (503) déplaçables avec la partie de transport (7) et montées ou réalisées solidairement sur celle-ci de préférence sous forme d'aimants permanents (503a), et des parties primaires (502) stationnaires par rapport à ceux-ci dans un intervalle d'espacement (Sp) pour la génération de champs électromagnétiques, les parties primaires (502) étant engagées sur un côté d'engagement de moteur (MA) des parties secondaires (503) en déplaçant les parties secondaires (503),
- les parties primaires (502) comprenant une pluralité de zones connectées les unes derrière les autres et ayant des enroulements de stator qui peuvent être alimentés à différents angles de phase ou avec différents angles de phase et avec des amplitudes de courant présélectionnables,
- un dispositif de pilotage (AE) comportant des convertisseurs ou des convertisseurs de fréquence qui comprennent un étage de sortie, de puissance ou d'attaque ou qui sont suivis d'un étage de sortie, de puissance ou d'attaque,
- le dispositif de pilotage (AE) étant construit de telle sorte qu'en fonctionnement normal, les parties secondaires (503) entraînées par moteur linéaire sont disposées dans la zone d'étirage simultané (R) d'une phase d'accélération avec un profil d'accélération en fonctionnement normal et avec une augmentation croissante de la distance (MDx_y) par rapport à une unité de transport (T) successive entraînée par l'entraînement à moteur linéaire,
**caractérisé par** les autres éléments suivants :
- l'unité de pilotage (AE) est construite et adaptée de telle sorte que, lors de l'approche de la bande de matériau (F) jusque dans la zone d'étirage (R), au moins deux pinces successives (6) en avance entraînées par le moteur linéaire sont accélérées dans la zone d'étirage (R) de manière à s'écarter du profil d'accélération en fonctionnement normal de telle sorte que la distance (MDa_b) formée entre lesdites au moins deux pinces successives (6) entraînées par moteur linéaire est inférieure à 75% de la distance (MDx_y) formée en fonctionnement normal, inférieure à 80% ou inférieure à 75% de la distance (MDx_y) formée en fonctionnement normal.

9. Installation d'étirage simultané selon la revendication 8,
**caractérisée en ce que** le dispositif de pilotage (AE) est construit et adapté de telle sorte que la distance (MDa_b) entre lesdites au moins deux pinces successives (6) en avance entraînées par l'entraînement à moteur linéaire au niveau de la zone d'étirage (R) est inférieure à 70%, en particulier inférieure à 60%, 50%, 40%, 30%, 20% et en particulier inférieure à 10% par comparaison à la distance correspondante (MDx_y) dépendante de la position et/ou de la zone en fonctionnement normal.

10. Installation d'étirage simultané selon la revendication 8 ou 9, **caractérisée en ce que** le dispositif de pilotage (AE) est construit et adapté de telle sorte que lesdites au moins deux pinces successives (6) entraînées par un entraînement à moteur linéaire dans la zone d'étirage (R) sont entraînées à la même vitesse et à la même accélération avec une distance (MDa_b) inchangée l'une par rapport à l'autre.

11. Installation d'étirage simultané selon l'une des revendications 8 à 10, **caractérisée en ce que** le dispositif de pilotage (AE) est construit et adapté de telle sorte que deux unités de transport (T) entraînées par un moteur linéaire avec les pinces (6) associées traversent au moins 80% ou 90% ou 100% de la zone d'étirage simultané (R) tout en étant en contact l'une avec l'autre à une distance réduite à 0.

12. Installation d'étirage simultané selon l'une des revendications 8 à 11, **caractérisée en ce qu'**au moins une ou au moins deux unités de transport (Ta) en avance non entraînées ayant des pinces associées (6a) non entraînées sont disposées successivement entre deux unités de transport successives (T) en avance entraînées par le moteur linéaire et ayant les pinces associées (6).

13. Installation d'étirage simultané selon l'une des revendications 8 à 12, **caractérisé en ce que** le dispositif de pilotage (AE) est construit et adapté de telle sorte que lesdites au moins deux unités de transport successives (T) en avance entraînées par un entraînement à moteur linéaire et ladite au moins une unité de transport (Ta) en avance non entraînée ayant des pinces associées (6a) et prévue le cas échéant entre lesdites unités de transport (T) entraînées avec des pinces associées (6a) traversent la zone d'étirage (R) et de préférence la zone de sortie (A) en tant que dispositif de traction global (LOK) entraîné en commun.

14. Installation d'étirage simultané selon la revendication 13,
**caractérisée en ce que** l'unité de pilotage (AE) est construite et adaptée de telle sortie que le dispositif de traction global (LOK) traverse la zone d'étirage (R) avec un profil d'accélération qui correspond au profil d'accélération de la dernière unité de transport (Ta) en retard faisant partie du dispositif de traction global (LOK).
